(19) 

**Europäisches Patentamt**
**European Patent Office**
**Office européen des brevets**

(11) **EP 4 435 933 A1**

(12) **EUROPEAN PATENT APPLICATION**

(43) Date of publication:
**25.09.2024 Bulletin 2024/39**

(21) Application number: **23173658.8**

(22) Date of filing: **16.05.2023**

(51) International Patent Classification (IPC):
*H01M 10/627* (2014.01)    *H01M 10/6556* (2014.01)
*H01M 10/6568* (2014.01)    *H01M 10/66* (2014.01)
*F24T 10/10* (2018.01)    *F24D 11/02* (2006.01)
*F24D 10/00* (2022.01)    *F24D 12/00* (2006.01)
*F24D 101/30* (2022.01)    *F24D 103/00* (2022.01)

(52) Cooperative Patent Classification (CPC):
**H01M 10/627; F24D 10/00; F24D 11/0221;**
**F24D 12/00; F24T 10/10; H01M 10/6556;**
**H01M 10/6568; H01M 10/66;** F24D 2101/30;
F24D 2103/00; F24D 2200/12; F24D 2200/13;
F24D 2200/29; F24H 2240/01; H01M 2220/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.03.2023 US 202363491340 P**

(71) Applicants:
• **Services Pétroliers Schlumberger**
**75007 Paris (FR)**
Designated Contracting States:
**FR**
• **Schlumberger Technology B.V.**
**2514 JG The Hague (NL)**
Designated Contracting States:
**AL AT BE BG CH CY CZ DE DK EE ES FI GB GR**
**HR HU IE IS IT LI LT LU LV MC ME MK MT NL NO**
**PL PT RO RS SE SI SK SM TR**

(72) Inventors:
• **TONIOLO, Julien**
**Texas, 77478 (US)**
• **SIMON, Matthieu**
**92142 Clamart CEDEX (FR)**

(74) Representative: **Schlumberger Intellectual**
**Property Department**
**Parkstraat 83**
**2514 JG Den Haag (NL)**

(54) **RECOVERY OF WASTE ENERGY FROM BATTERY ENERGY STORAGE SYSTEMS**

(57)    Certain aspects of the present disclosure provide techniques for recovery of waste energy from a battery energy storage system. A system includes a battery energy storage system including one or more rechargeable batteries; an energy recovery system coupled to the battery energy storage system, wherein the energy recovery system is configured to: capture heat generated by one or more of charging and discharging the one or more rechargeable batteries; and store or use energy associated with the captured heat.

**EP 4 435 933 A1**

**Description**

**Cross-Reference to Related Application & Priority Claim**

This application claims benefit of and priority to U.S. Provisional Application No. 63/491,340, filed March 21, 2023, which is herein incorporated by reference in its entirety for all applicable purposes.

**BACKGROUND**

*Field of the Disclosure*

Aspects of the present disclosure relate to renewable energy and, more particularly, to techniques for recovery of waste energy from battery energy storage systems (BESSs).

*Description of Related Art*

Energy storage is important to decarbonizing the power system and reducing greenhouse gas emissions. Energy storage is also essential to the building of resilient, reliable, and affordable electricity grids that can handle the variable nature of renewable energy sources (also referred to herein as, "renewables"). For example, the availability of wind and solar energy is variable due to the intermittent presence or absence of wind or sunlight at different times. Due to the intermittence of renewable energy sources, as well as local or transient capability grid challenges, there is a need to store electrical energy.

A BESS includes rechargeable batteries that can store energy from different sources for later use. A BESS can be used to balance the electric grid, provide backup power, and improve grid stability. In some uses, BESSs enable energy from renewables, like solar and wind, to be stored and then for the energy to be discharged when needed. A BESS may be used to smooth out fluctuations in power demand and supply, to regulate voltage and frequency, and to provide backup power in case of a power outage ensuring that essential services such as hospitals, emergency services, and communication networks remain operational. The use of BESSs can help to reduce the need for fossil-fuel-based power plants and to increase the integration of renewable energy sources into the grid.

Recently, advances in electrochemical battery technology makes BESSs a viable solution for larger capacity energy storage, such as for commercial, large residential, or industrial applications or at larger scale level.

The likelihood of adoption and the usefulness of BESSs increases with the efficiency of the BESS. One factor for the efficiency of a BESS is the round trip efficiency (RTE) of the BESS. The RTE is defined as the ratio of the total energy output by the system to the total energy input to the system, as measured at the point of connection. A high RTE value means that the incurred losses are low, resulting in improved efficiency and cost-effectiveness of the BESS. Accordingly, reducing the total energy input to a BESS and/or increasing the total energy output by the BESS increases the RTE of the BESS.

Typically, when batteries of a BESS are charged, or discharged, significant heat is generated and released (e.g., into the ambient air). This heat released by the batteries is waste energy, which reduces the total energy output of the BESS and, in turn, reduces the RTE of the BESS.

Consequently, there exists a need for further improvements in battery energy storage systems to overcome, at least, the aforementioned technical challenges.

**SUMMARY**

One aspect provides a system for recovery of waste energy from a BESS. The system includes a battery energy storage system including one or more rechargeable batteries; an energy recovery system coupled to the battery energy storage system, wherein the energy recovery system is configured to: capture energy associated with heat generated by one or more of charging and discharging the one or more rechargeable batteries; and store or use the captured heat.

Another aspect provides a method for recovery of waste energy from a BESS. The method includes charging or discharging one or more rechargeable batteries of a battery energy storage system; capturing heat generated by the charging or discharging of the one or more rechargeable batteries; and storing or using energy associated with the captured heat.

Another aspect provides a system for recovery of waste energy from a BESS. The system includes a battery energy storage system including one or more rechargeable batteries. The battery energy storage system is connected to an energy grid. The system includes an energy recovery system coupled to the battery energy storage system. The energy recovery system comprises: a first heat pump or heat exchanger configured to: capture energy from a heat exchange medium heated by one or more of charging and discharging the one or more rechargeable batteries; and transfer the energy to at least one flow fluid in at least one fluid conduit. The system includes one or more conduits including the at least one fluid conduit. The one or more conduits are configured to transfer the at least one flow of fluid to one or more geothermal energy storages, to at least one building, or a combination thereof.

The following description and the appended figures set forth certain features for purposes of illustration.

## BRIEF DESCRIPTION OF DRAWINGS

The appended figures depict certain features of the various aspects described herein and are not to be considered limiting of the scope of this disclosure.

**Figure 1** depicts an example energy grid.

**Figure 2** depicts an example geothermal storage.

**Figure 3** depicts an example BESS.

**Figure 4** depicts an example energy recovery system for a BESS connected to an energy grid and using geothermal energy storage.

**Figure 5** depicts an example energy recovery system for a BESS connected to a building heating and cooling system.

**Figure 6** depicts an example energy recovery system for a BESS connected to a building heating and cooling system and using geothermal energy storage.

**Figure 7** depicts a process flow for recovery of waste energy from a BESS.

## DETAILED DESCRIPTION

Aspects of the present disclosure provide apparatuses, methods, systems, and computer-readable mediums for recovery of waste energy from a battery energy storage system.

*Introduction to Energy Grid, Renewable Energy, and Energy Storage*

The techniques, methods, and systems described herein for recovery of waste energy from a battery energy storage system may be used for various scenarios. While aspects may be described with respect to a BESS connected to an energy grid, aspects of the present disclosure may likewise be applicable to recovery of waste energy of BESSs not connected to an energy grid and well as to recovery of waste energy of BESSs in other use cases or systems not explicitly mentioned herein.

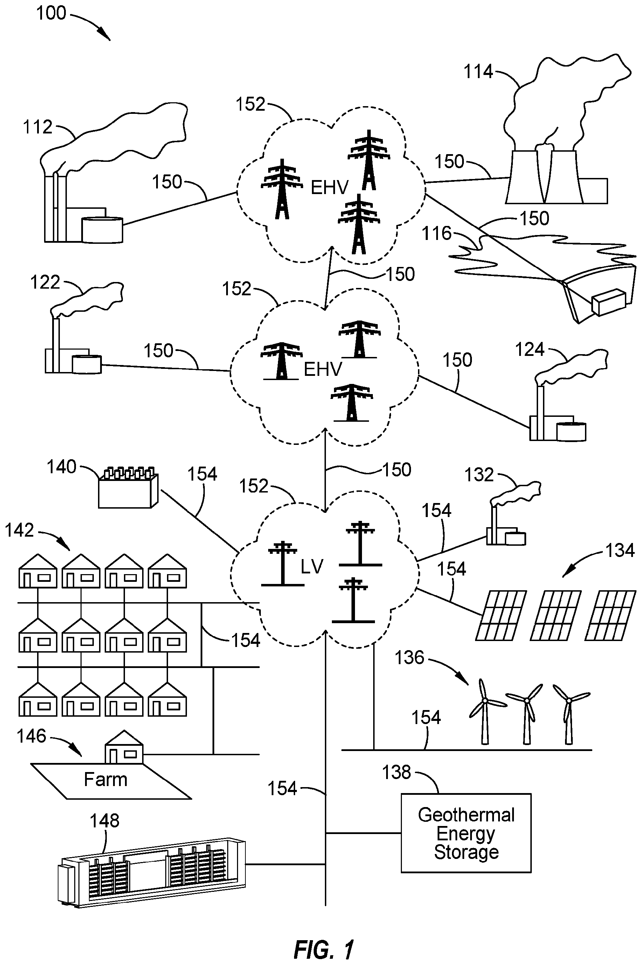

**Figure 1** depicts an example energy grid 100 in which certain aspects of the present disclosure may be applied. An energy grid, also known as an electrical grid, is a complex interconnected system of power generators, transmission lines, transformers, and other electrical infrastructure that work together to deliver electricity from energy sources to homes, businesses, and other consumers. Electrical grids vary in size and can cover whole countries or continents.

The energy grid 100 may be divided into three main parts: generation, transmission, and distribution.

Electricity generation is the process of generating electric power from sources of primary energy, which may be at power stations. Power stations may be located near energy sources and away from heavily populated areas. Generation of energy may be done with electromechanical generators driven by heat engines, the kinetic energy of water (hydro) and/or wind, solar photovoltaics, and geothermal power. The generation component of the energy grid includes energy sources. Energy sources of the energy grid 100 may include extremely high voltage (EHV) power sources (e.g., power sources in a range of a few hundred megawatts (MW) to tens of thousands of MW or higher, in one example 300 MW - 25000 MW power sources), such as large fossil fuel plants 112 (e.g., coal plants), nuclear power plants 114, and renewable energy sources such as hydroelectric plants 116 (e.g., dams). Energy sources of the energy grid 100 may include high voltage (HV) power sources (e.g., power sources in a range of a tens of MW to hundreds of MW, in one example 20 MW - 299 MW power sources), such as medium-sized fossil fuel plants 122, 124. Energy sources of the energy grid may include low power sources (e.g., power sources up to tens of MW, in one example 0 MW - 20 MW power sources), such small fossil fuel plants 132 (e.g., a city power plant), and renewable energy sources such as solar farms 134, wind farms 136, and geothermal energy storage 138. These power stations produce electricity, which is then transmitted to the next component of the grid.

It should be understood that while **Figure 1** illustrates example energy sources of an energy grid 100, the energy grid 100 may include additional energy sources, different types of energy sources, or a subset of the depicted energy sources. Further, it should be understood that while certain energy sources are described as extremely high voltage, high voltage, and low voltage, that this is only one illustrated example and that any of the energy sources described herein may be low voltage, high voltage, or extremely high voltage energy sources.

Electric power transmission is the bulk movement of electrical energy from a generating site (e.g., a power station), via a web of interconnected power lines, to an electrical substation from which the electric power is connected to the distribution system. Transmission networks may be complex with redundant pathways. The physical layout is often forced by what land is available and its geology. Redundancy allows line failures to occur and the power can be rerouted through a redundant pathway while repairs are done.

The transmission component of the energy grid 100 includes a network of power lines 150 and transmission towers 152, supporting overhead power lines, that transport electricity from the power sources to local substations. Because the power may be generated far from where the power is consumed, the transmission system can cover great distances. For a given amount of power, transmission efficiency is greater at higher voltages and lower currents. Therefore, voltages may be stepped up at the generating station, and stepped down at local substations (e.g., transformers) for distribution to customers. Use of high voltage power lines 150 minimizes energy loss during transmission.

Once the electricity reaches the local substations, the electricity enters the distribution component of the energy grid 100. Distribution is the final stage in the delivery of power where electricity is distributed from the transmission system to individual consumers. The distribution system includes transformers (not shown), low-voltage power lines 154, and other equipment (not shown) that bring electricity from the substations to homes 142, businesses/factories 140, farms 146, and/or other electricity consumers. Electrical substations may step voltage up or down (e.g., to customer service voltages).

Overall, the energy grid 100 is an essential part of modern society, providing a reliable and affordable source of electricity to power homes, businesses, and infrastructure around the world. The energy grid 100 is designed to be a highly interconnected system. This means that if one part of the energy grid 100 fails, the other parts can still function, allowing power to be rerouted and preventing widespread power outages. Additionally, the energy grid 100 balances the supply and demand of electricity in real-time, ensuring that enough electricity is available to meet the needs of consumers at all times.

One approach for balancing the supply and demand of electricity is the use of grid energy storage (also called large-scale energy storage). Grid energy storage refers to a collection of methods used for energy storage on a large scale within an electrical power grid. Energy is stored during times when electricity is plentiful and inexpensive (especially from intermittent power sources such as renewable electricity from wind power, tidal power, and solar power) or when demand is low, and the energy is later returned to the grid when demand is high, and electricity prices tend to be higher.

Conventionally, the largest form of grid energy storage is dammed hydroelectricity. Developments in battery storage have enabled commercially viable projects to store energy during peak production and release during peak demand, and for use when production unexpectedly falls giving time for slower responding resources to be brought online.

One form of energy storage is geothermal energy storage. As shown in **Figure 1,** energy grid 100 may include a geothermal energy storage 138. Geothermal energy storage is a method of storing thermal energy produced by geothermal power plants for later use. The process involves the use of underground reservoirs or aquifers to store the excess heat produced during the operation of a power plant. The stored heat can then be retrieved and used to generate electricity during periods of high energy demand, such as peak hours, or during periods of low energy production, such as when the geothermal source is not producing enough heat. One advantage of geothermal energy storage is its high efficiency.

The storage of geothermal energy may involve several components: production wells, power plants, heat exchanger, a storage medium, and injection wells. Production wells are used to extract hot water or steam from a geothermal reservoir or aquifer. A geothermal power plant converts the heat energy from the extracted water or steam into electricity. A heat exchanger is used to transfer the excess heat produced during the operation of the power plant to a storage medium. The storage medium can be an underground reservoir, an aquifer, or a borehole. The excess heat produced by the power plant is transferred to the storage medium through the heat exchanger. The injection wells are used to inject the cooled water or steam back into the geothermal reservoir or aquifer.

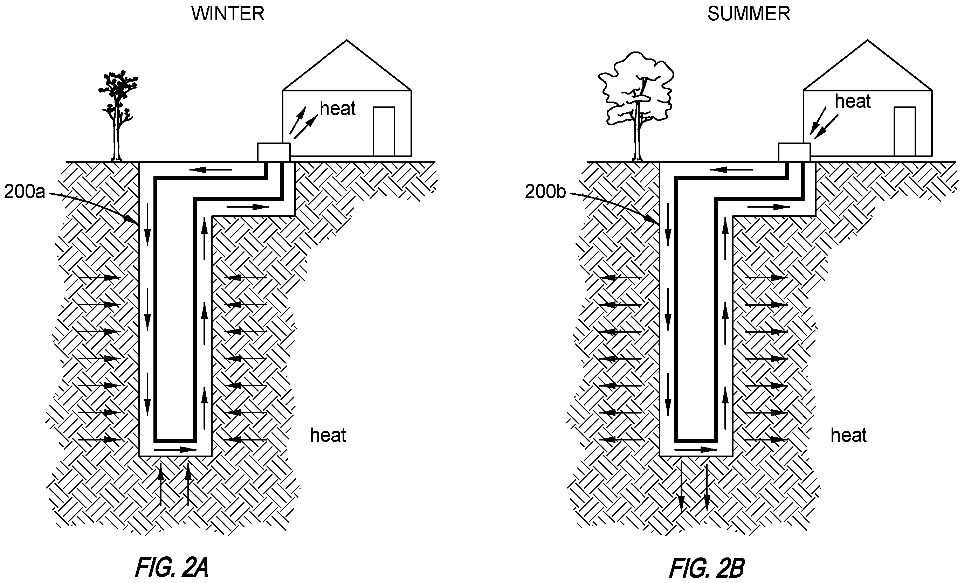

During periods of low energy demand or low geothermal production, the stored heat can be retrieved from the storage medium by reversing the flow of water or steam through the heat exchanger as shown for the geothermal boreholes 200a and 200b, in **Figures 2A-2B,** respectively. The retrieved heat can then be used (for instance using heat pump or heat exchanger) where heat is necessary (e.g., to heat building, or in industrial processes), which limits the provision of electricity, fossil fuel or other non-renewable energy sources for heating purpose. Optionally, the heat may be used to generate electricity (for instance via a reverse rankine cycle), reducing the need for fossil fuels or other non-renewable energy sources. Geothermal boreholes may vary in depth and number.

Another form of energy storage is battery energy storage. As shown in **Figure 1,** energy grid 100 may include a BESS 148. BESSs include rechargeable batteries that can store energy from different sources for later use.

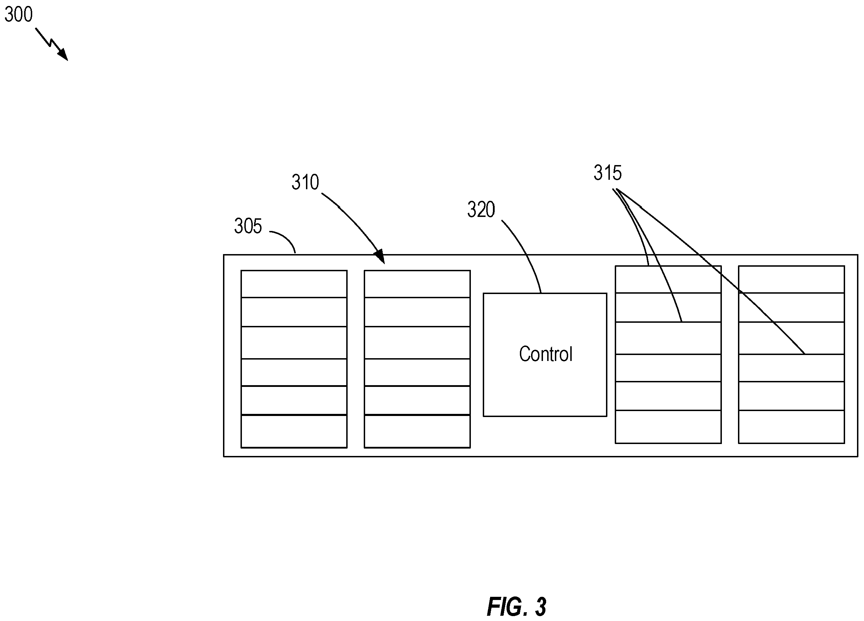

**Figure 3** depicts an example BESS 300 (which may be an example of a BESS 148 in **Figure 1**). BESS 300 may include a housing 305, a battery bank 310 of rechargeable batteries 315, and a control system 320. While **Figure 3** depicts a single housing with battery bank, it should be understood that a BESS may include a collection of housings and battery banks which may be individually and/or collectively controlled.

The battery bank 310 may be a collection of multiple rechargeable batteries 315, connected in series or parallel, to provide a target voltage and current capacity. The batteries 315 used in BESS 300 can be lithium-ion, lead-acid, nickel-hydrogen, or other types of rechargeable batteries, depending on the specific application and requirements.

BESS 300 may include an inverter (not shown) that converts the direct current (DC) power stored in the battery bank into alternating current (AC) power that can be used by homes, businesses, or the grid. The inverter may also manage the charging and discharging of the battery bank 310, ensuring that the batteries 315 are charged when excess power is available and discharged when there is a demand for electricity.

BESSs can be deployed at different scales, ranging from residential to utility-scale applications. The size of the battery bank 310 and the inverter capacity may depend on the application and the amount of power required.

The control system 320 may manage the operation of the BESS 300, including monitoring the battery bank 310 state of charge, controlling the inverter's output, and protecting the battery bank 310 from overcharging, over-discharging, and other faults. The control system 320 may include an energy management system (EMS). The energy management system is responsible for optimizing the operation of the BESS to meet the specific requirements of the application. The energy management system takes into account factors such as power demand, electricity prices, renewable energy generation, and grid conditions to determine the optimal charging and discharging strategies for the battery bank 310. Control system 320 may use intelligent battery software algorithms to coordinate energy production and decide when to keep the energy to provide energy reserves or to release the energy to the grid.

Thus, a BESS can be used to balance the energy grid, provide backup power, and improve grid stability. In addition, with or without being connected to an energy grid (such as energy grid 100), BESSs enable energy from renewables, to be stored. Further, a BESS may also be used to provide backup power in case of a power outage.

The efficiency of a BESS improves the cost-effectiveness and viability of BESSs for large-scale energy storage. The efficiency of a BESS can be measured as the RTE. The RTE is defined as the ratio of the total energy output by the system, $E_{out}$, to the total energy input to the system, $E_{in}$ as shown in Equation 1:

$$\mathrm{RTE} = E_{out} / E_{in} \qquad\qquad \textbf{Eq. 1}$$

A high RTE value means that the incurred losses are low, resulting in improved efficiency and cost-effectiveness of the BESS.

In conventional BESS, the total energy input to the system, $E_{in}$, includes the energy used to charge the battery $E_{in\_charge}$ and any energy required for auxiliary systems, $E_{in\_auxiliary}$, such as pumps or fans for cooling, and the total energy output by the system, $E_{out}$, is the energy discharged by the batteries, $E_{out\_discharge}$.

Typically, however, when batteries of a BESS are charged, or discharged, significant heat is generated and released. This heat is waste energy, which reduces the total energy output by the BESS, $E_{out}$, thereby reducing the RTE of the BESS.

Accordingly, aspects of the present disclosure provide techniques, methods, apparatus, and systems for recovery of the waste energy from a BESS to increase the efficiency of the BESS.

*Recovery of Waste Energy from a BESS*

Recovery of the waste energy-heat generated when batteries of a BESS are charged or discharged, $E_{out\_thermal}$-increases the RTE of the BESS. For example, the recovered waste energy, $E_{out\_thermal}$, is added to the energy discharged by the battery $E_{out\_discharge}$ to the total energy output of the BESS, thereby increasing $E_{out}$ to $E_{out\_discharge} + E_{out\_thermal}$. The larger $E_{out}$ increases the RTE of the BESS.

The heat generated by charging and discharging the batteries of the BESS, $E_{out\_thermal}$, includes both the heat released by the battery cell in the electrochemical reactions that occur in the cell when the cell charges and discharges, $E_{out\_thermal\_cell}$, and the heat released by the battery from the wiring and connectors (e.g., due to the fact that the conductors used are not perfect conductors and that these systems use relatively large currents) $E_{out\_thermal\_Joule}$.

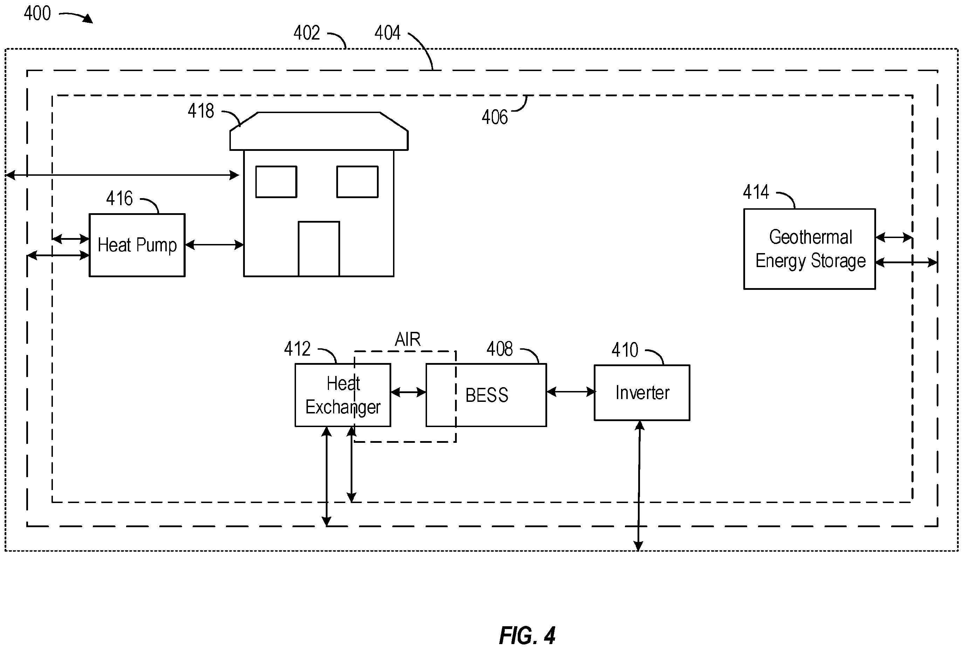

As will be discussed in more detail below with respect to **Figures 4-6,** the waste energy may be recovered from a BESS (e.g., such as BESS 148 depicted in **Figure** 1 or BESS 300 depicted in **Figure 3**) connected to an energy grid (e.g., such as energy grid 100) or from a BESS not connected to an energy grid.

As an example, the waste energy recovered from a BESS may be used to provide energy to one or more energy consumers. For example, the waste energy recovered from the BESS may be transferred to one or more buildings, such as residential, commercial, or industrial buildings. In the examples illustrated with respect to **Figures 4-6,** the waste energy recovered from the BESS is transferred to a heating and cooling system serving the one or more buildings. In some examples, the waste energy recovered from the BESS is transferred to a district heating and cooling (DHC) system.

A DHC system provides heating and/or cooling to multiple buildings from a central source via a network of (e.g., insulated) pipes that circulates a heating fluid (such as water) and heat exchangers or heat pumps, to transfer calories of the heating fluids to the building heating systems. The DHC system is an energy-efficient and cost-effective way to provide thermal energy to buildings, reducing the need for individual heating and cooling systems in each building. The water may return to the central source to be reheated or re-cooled, creating a closed-loop system.

Fifth-generation district heating and cooling (5GDHC) networks do not use combustion on-site as a central source to heat the heating fluid and have zero emissions of $CO_2$ and $NO_2$ on-site. 5GDHC networks employ heat transfer using electricity, which may be generated from renewable energy or from remote fossil-fueled power stations.

A 5GDHC network may distribute heat at near ambient ground temperature, which may minimize heat losses to the ground and reduce the need for extensive insulation. Each building on the 5GDHC network may use a heat pump in a plant room of the building to extract heat from the ambient circuit when it needs heat, and use the same heat pump in reverse to reject heat when it needs cooling. In periods of simultaneous cooling and heating demands, waste heat from cooling can be used in heat pumps at those buildings which need heating. The overall temperature within the ambient circuit may be controlled by heat exchange with an aquifer or another low temperature water source to remain within a temperature range from 10 °C to 25 °C. As with prior generations, the pipe network is an infrastructure that in principle provides an open access for various low temperature heat sources, such as ambient heat, ambient water from rivers, lakes, sea, or lagoons, and waste heat from industrial or commercial sources

As will be discussed in more detail below with respect to **Figures 4-6,** waste energy from the BESS may be captured via a heat exchanger and/or a heat pump. A heat pump is a device that can transfer heat energy from one place to another. A heat pump may use a refrigerant to transfer heat from a low-temperature source (e.g., outdoor air or groundwater) to a high-temperature destination (e.g., a building). Heat pumps may be used for space heating and cooling, as well as for heating water.

In some examples, the basic components of a heat pump may include a compressor, an outdoor coil, an indoor coil, and a reversing valve. The compressor pumps the refrigerant through the system. The outdoor coil is where the refrigerant absorbs heat from the outside (e.g., air, water, or other fluid) or other sources. The indoor coil is where the refrigerant releases heat to the inside air or other destination (e.g., to a fluid conduit or a building). The reversing valve is used to reverse the direction of the refrigerant flow, so that the heat pump can either provide heating or cooling.

When the heat pump is operating in heating mode, the refrigerant absorbs heat from the outdoor source, and then transfers that heat to the indoor destination. This is achieved by compressing the refrigerant to increase its temperature, then circulating it through the outdoor coil to absorb heat, and finally circulating it through the indoor coil to release heat. The reversing valve is set to direct the refrigerant flow in this direction, from the outdoor coil to the indoor coil.

When the heat pump is operating in cooling mode, the refrigerant absorbs heat from the indoor destination, and then transfers that heat to the outdoor or other source. This is achieved by reversing the direction of the refrigerant flow, so that it circulates through the indoor coil to absorb heat, and then through the outdoor coil to release heat. The reversing valve is set to direct the refrigerant flow in this direction, from the indoor coil to the outdoor coil.

While the above refers to the "indoor" and "outdoor", which may refer to an air-air heat pump, it should be noted that the medium of the low temperature source or high temperature source may be any fluid, including gases, liquids, or solids and may be either indoor or outdoor.

A heat exchanger is a device that transfers heat between two or more fluids, or between a fluid and a solid surface. Heat exchangers are commonly used in a wide range of industrial and commercial applications, such as refrigeration, air conditioning, power generation, and chemical processing.

Heat exchangers use a conductive material (e.g., a metal) to transfer heat from one fluid to another. The two fluids are separated by a thin wall, which allows heat to flow from one side to the other while keeping the fluids themselves separate. A heat exchanger works by bringing the two fluids into close contact with each other, maximizing the surface area available for heat transfer. As the fluids flow past each other, heat is transferred from the hotter fluid to the cooler fluid. The rate of heat transfer depends on several factors, including the temperature difference between the two fluids, the flow rates of the fluids, and the physical properties of the fluids and the heat exchanger material.

Two types of heat exchangers include shell-and-tube heat exchangers and plate-and-frame heat exchangers. Shell-and-tube heat exchangers include a cylindrical shell with a bundle of tubes running through it. One fluid flows through the tubes, while the other flows through the space between the tubes and the shell. Plate-and-frame heat exchangers includes a series of thin plates with small channels running through them. One fluid flows through the channels on one side of the plates, while the other fluid flows through the channels on the other side. It should be understood, however, that any type of heat exchanger may be used according to the present disclosure.

Another type of heat exchanger is a ground heat exchange system. When undisturbed, the ground temperature generally remains constant throughout the year, usually between 10-16°C (50-60°F) depending on the location. This makes the ground an ideal source for heating and cooling, as the heat pump can easily extract or reject heat from the ground with the ground temperature remaining relatively constant (e.g., without large temperature changes of the ground) with minor energy loss (e.g., as the pump circulating the fluid are also very energy efficient).

A ground heat exchange system may include a series of pipes or loops that are buried underground and a heat pump that circulates a fluid through the loops. The fluid absorbs heat from the ground in winter providing heating for the building, and the excess heat in the building during summer is absorbed and sent to the ground, providing cooling for the building. A ground heat exchange system may use horizontal loops and/or vertical loops (e.g., referred to as a borehole heat exchanger). Horizontal loops may be installed in trenches that are dug at a depth of for example about 1.5 meter to 2 meters and may be used in residential applications. Vertical loops may be installed by drilling boreholes (e.g., geothermal boreholes), that may go up to around 200 meters deep, and may be used in larger commercial and institutional buildings. The trenches or boreholes may also be considered as a geothermal energy storage.

A borehole heat exchanger (BHE) may include a series or array of boreholes that are drilled into the ground. The boreholes may be spaced apart (e.g., several meters apart). The boreholes are then filled with a fluid that circulates through a closed loop. The fluid absorbs or releases heat from the surrounding rock and soil, which is then transferred to a heat pump that provides heating and cooling to a building.

In some aspects, a geothermal energy storage (e.g., borehole heat exchanger) may have a pyramid-like shape for an efficient ground heat exchanger having a large surface area of ground contact with only a small surface opening. For example, the geothermal energy storage may include a single relatively narrow surface-opening and beneath the surface an array of multiple inclined boreholes.

In some aspects, the waste energy recovered from the BESS may be converted back to electricity and used.

As will be discussed in more detail below with respect to **Figures 4-6,** the waste energy captured from the BESS may be transferred from the BESS, for storage or use, via one or more fluid conduits.

As will be discussed in more detail below with respect to **Figures 4-6,** the waste energy captured from the BESS may be transferred to the one or more buildings via a heat exchanger or a heat pump.

As will be discussed in more detail below with respect to **Figures 4-6,** the waste energy captured from the BESS may be first transferred to storage and later transferred to one or more buildings for use. In some examples, the waste energy captured from the BESS is transferred to a geothermal energy storage, such as one or more geothermal boreholes. In some examples, the captured waste energy is transferred from the BESS to the geothermal energy storage and/or from the geothermal energy storage to the one or more buildings via the one or more fluid conduits.

**Figure 4** depicts an example energy recovery system 400 for a BESS connected to an energy grid and using geothermal energy storage according to certain aspects.

As shown in **Figure 4,** the example energy recovery system 400 includes a BESS 408 (e.g., such as a BESS 148 depicted in **Figure 1** or a BESS 300 depicted in **Figure 3**). As discussed herein, the BESS 408 may include a storage bank of any type of rechargeable batteries, for example nickel-hydrogen rechargeable batteries.

In the example shown in **Figure 4,** BESS 408 is coupled an energy grid 402 (e.g., such as energy grid 100). BESS 408 may include or be coupled to an inverter 410 for converting the electricity between the energy grid 402 and BESS 408 for distribution to consumers on the energy grid 402. In some aspects, the BESS 408, for example via the energy grid, is connected to a source of renewable energy. In some examples, the BESS 408 stores energy from the source of renewable energy during times when energy production is high and/or when demand for energy is low, and the BESS 408 provides the stored energy to consumers when the source of renewable energy production is low and/or when the demand for energy is high.

In some aspects, the system includes flow meters and temperature sensors that provide information used to determine whether to transfer the energy recovered from the BESS 408 for use or for storage. In some aspects, the system includes current and voltage sensors to measure the current and voltage on the energy grid 402. The current and voltage measurements may be used to regulate the frequency of the energy grid 402.

In some aspects, the system determines whether to use or store the energy recovered from the BESS based on additional information related to forecasted energy production or expected energy demand, such as upcoming holidays, weekends or weekdays, emergencies, weather events, time of day, and the like.

When the batteries of the BESS 408 are cycled (e.g., charged or discharged), heat energy is released. In an illustrative example of a BESS with an efficiency of 87%, for every 1 megawatt hour (MWh) charged or discharged $5.4 \times 10^8$ (540 million) Joules of heat energy are released.

The heat generated by the BESS 408 can be harvested by a heat exchanger 412. The heat exchanger 412 can use air or liquid on the cell side and air or liquid on the consumer side. In the example shown in **Figure 4,** air surrounding the BESS 408 is heated by the energy released by the charging or discharging of the batteries. The heated air is captured by the heat exchanger 412 and exchanged to cold or warm fluid.

In some aspects, the battery cells of BESS 408 are cooled down with forced air (e.g., using fans) or a water cooling loop. In some aspects, the capturing of the heat released by the BESS 408 also provides cooling for the battery cells of BESS 408. In some examples, a heating ventilation and cooling (HVAC) system or chiller system is used.

In some aspects, the heat generated is transferred passively to warm fluid flow conduit 404 or cool fluid flow conduit 406. In some aspects, the warm fluid flow is a higher temperature fluid flow than the cool fluid flow. In one example, the warm fluid flow may be at a temperature of around 30° C and the cool fluid flow may be a temperature of around 5° C. In some examples, the warm fluid flow conduit 404 is a pipe network forming a loop (e.g., a ring) and carrying warm water, and the cool fluid flow conduit 406 is a pipe network forming a loop and carrying cool water. It should be understood that while pipe networks are described, the conduit may be any conduit suitable for a fluid flow therein, preferably, the conduit has low thermal loss.

The fluid conduits may transfer the energy captured from the BESS 408 to one or more buildings 418 and/or geothermal energy storages 414. For example, in a period of high demand, the energy may be delivered directly to the one or more buildings 418, while in a period of low demand, the energy may transferred to the one or more geothermal energy storages 414 for later delivery to the one or more buildings 418. As shown, the one or more buildings 418 may be connected to the energy grid.

In the example illustrated in **Figure 4,** the warm fluid flow conduit 404 or cool fluid flow conduit 406 can deliver the energy (e.g., in the form of warmed or cooled fluid carried in the conduit), captured from the BESS 408, directly to the one or more buildings 418 and/or can deliver the stored energy from the geothermal energy storage 414 to the one or more buildings 418. In some aspects, the warm fluid flow conduit 404 or cool fluid flow conduit 406 can further deliver energy independently generated by geothermal energy storage to the one or more buildings 418.

In the illustrative example of $5.4 \times 10^8$ (540 million) Joules of heat energy released for every 1 megawatt hour (MWh) discharged, this corresponds to heating up 245 m$^3$ of soil by 1 degree C (the soil having a specific heat of 2200 Joules per liter per Celsius degree).

In some aspects, the warm fluid flow conduit 404 or cool fluid flow conduit 406 are part of a district heating and cooling network (e.g., a 5GDHC system) delivering energy to multiple buildings 418.

In some aspects, the warm fluid flow conduit 404 or cool fluid flow conduit 406 transfer the energy to the one or more buildings 418 through a heat pump 416.

By recovering the heat released by the BESS 408, the energy loss is minimal. For example, the only energy losses would be the electrical auxiliary system energy and isolation related heat loss, which may be relatively small.

The recovered energy may be used for various different purposes once delivered, such as heating or cooling air, hot water, heating the floor, etc.

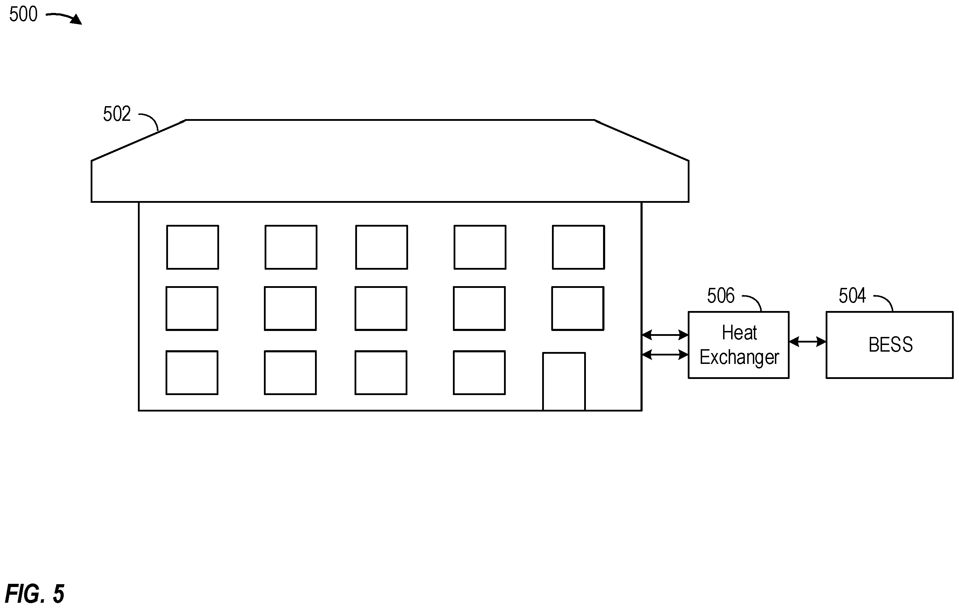

**Figure 5** depicts an example energy recovery system 500 for a BESS connected to a building heating and cooling system according to certain aspects. In the example illustrated in **Figure 5,** the BESS 504 is not connected to an energy grid. For example, a standalone BESS 504 may be used for large consumer buildings 502, such as a large residential, commercial, or industrial building 502 that may use its own BESS 504.

As shown in **Figure 5,** the heat released by the BESS 504, due to charging or discharging the batteries, may be captured and transferred to the building 502. The energy may be transferred to the building 502 with a heat exchanger 506 or heat pump.

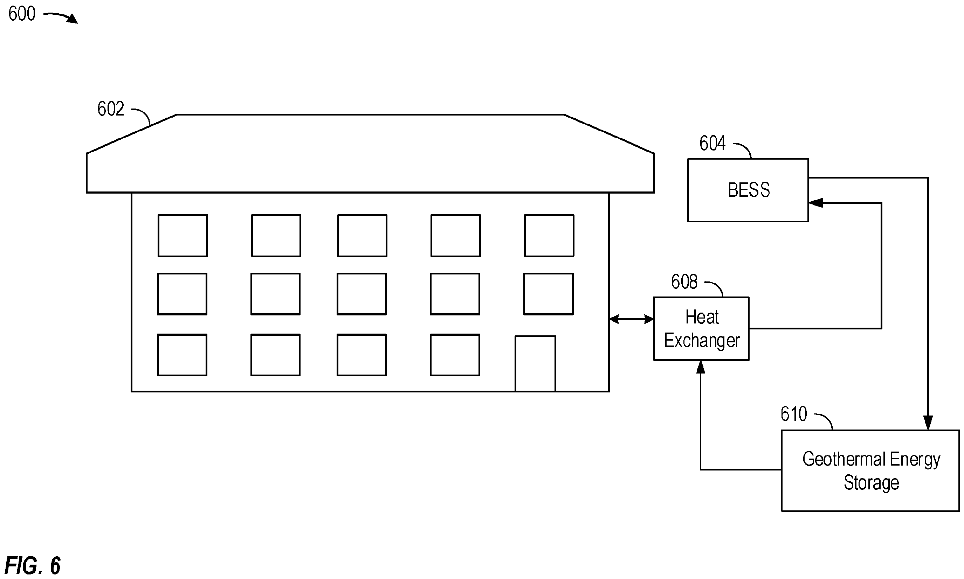

**Figure 6** depicts an example energy recovery system 600 for a BESS connected to a building heating and cooling system and using geothermal energy storage according to certain aspects. In the example illustrated in **Figure 6,** the BESS 604 is not connected to an energy grid. For example, the BESS 604 may be used for large consumer buildings 602, such as a large residential, commercial, or industrial building 602 that may use its own BESS 604.

As shown in **Figure 6,** the heat released by the BESS 604, due to charging or discharging the batteries, may be captured and transferred to the building 602. The energy may be transferred to the building 602 with a heat exchanger 608 or heat pump.

In the example illustrated in **Figure 6,** the heat released by the BESS 604, due to charging or discharging the batteries, is captured and transferred to geothermal energy storage 610, which may be a borehole or an array of boreholes. A borehole heat exchanger may recharge the subsurface thermal battery (e.g., heating the subsurface soil and rock).

Accordingly, when cycling the battery cells of the BESS 604, the energy can be captured and the heat pump or heat exchanger 608 can be used to use heat the building 602. If the energy is not needed, the heat pump can pump the captured energy into the ground to geothermal energy storage 610 and the energy can be pumped out later to the building 602 when needed.

The geothermal energy storage 610 may independently provide heating or cooling to the building without the captured heat released by the BESS 604. However, taking advantage of such captured heat may enable, among others, to optimize the borehole heat exchanger.

By injecting the waste heat in the borehole heat exchanger, fewer geothermal wells may be needed and the heat pump coefficient of performance is improved.

*Example Operations of Entities in a BESS Waste Energy Recovery System*

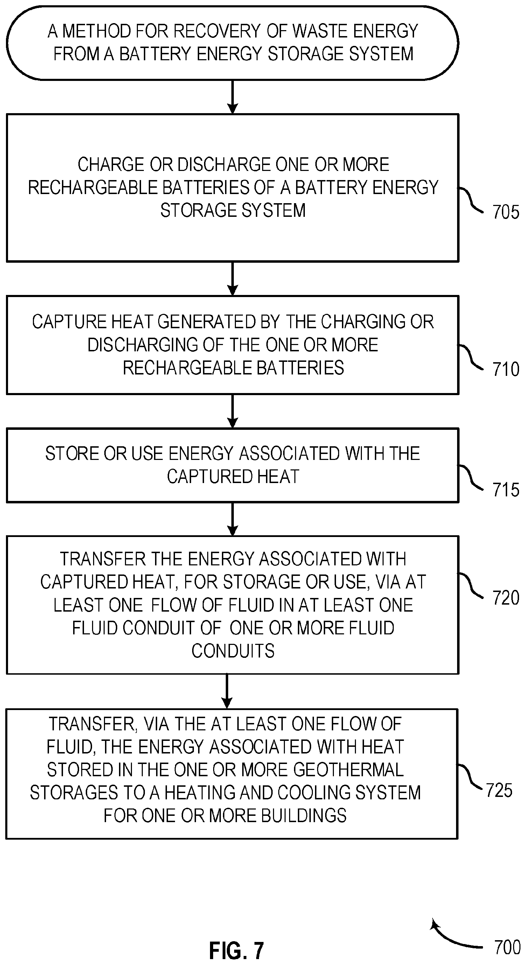

**Figure 7** depicts a process flow 700 for recovery of waste energy from a BESS. In some aspects, the BESS may be an example of the BESS 148 depicted and described with respect to **Figure 1** or BESS 300 depicted and described with respect to **Figure 3**.

The process flow 700 includes, at operation 705, charging or discharging one or more rechargeable batteries of a battery energy storage system.

In some aspects, the one or more rechargeable batteries comprises lithium ion batteries, hydrogen nickel batteries, or a combination thereof.

In some aspects, the battery energy storage system is coupled to an energy grid.

In some aspects, the battery energy storage system is not coupled to an energy grid.

The process flow 700 includes, at operation 710, capturing energy associated with heat generated by the charging or discharging of the one or more rechargeable batteries.

In some aspects, the capturing the heat generated by the one or more of charging or discharging the one or more rechargeable batteries is via a heat pump or heat exchanger.

In some aspects, the capturing the heat generated by the one or more of charging or discharging the one or more rechargeable batteries comprises capturing ambient air surrounding the one or more rechargeable batteries and transferring the energy associated with heat captured from the ambient air to a heating and cooling system of one or more buildings, one or more geothermal energy storages, one or more fluid conduits, or a combination thereof.

In some aspects, the heating and cooling system of the one or more buildings comprises a residential heating and cooling system, a commercial heating and cooling system, an industrial heating and cooling system, a large residential heating and cooling system, a district heating and cooling system, or a combination thereof.

In some aspects, the one or more geothermal energy storages comprise an array of geothermal boreholes.

The process flow 700 includes, at operation 715, store or use the captured energy associated with the heat generated by the charging or discharging of the one or more rechargeable batteries.

In some aspects, process flow 700 includes, at operation 720, transferring the energy associated with captured heat, for storage or use, via at least one flow of fluid in a at least one fluid conduit of one or more fluid conduits.

In some aspects, the one or more fluid conduits comprises a first fluid conduit comprising a first one or more pipes forming a first loop; the first flow of warm fluid comprises warm water; a second fluid conduit comprising a second one or more pipes forming a second loop; the second flow of cool fluid comprises cool water.

In some aspects, the process flow 700 further includes, at operation 725, transferring, via the at least one flow of fluid, the energy associated with heat stored in the one or more geothermal energy storages to a heating and cooling system for one or more buildings.

In some aspects, the process flow 700 further includes transferring via the first flow of warm fluid, the second flow of cool fluid, or both, energy independently generated by the one or more geothermal energy storages to a heating and cooling system for one or more buildings.

Note that process flow 700 is just one example of a method, and other methods including fewer, additional, or alternative steps are possible consistent with this disclosure.

*Example Clauses*

Implementation examples are described in the following numbered clauses:

Clause 1: A system, comprising: a battery energy storage system including one or more rechargeable batteries, wherein the battery energy storage system is connected to an energy grid; an energy recovery system coupled to the battery energy storage system, wherein the energy recovery system comprises: a first heat pump or heat exchanger configured to: capture energy from a heat exchange medium heated by one or more of charging and discharging the one or more rechargeable batteries; and transfer the energy to at least one flow of fluid in at least one fluid conduit; and one or more conduits including the at least one fluid conduit, wherein the one or more conduits are configured to transfer the at least one flow of fluid to one or more geothermal energy storages, to at least one building, or a combination thereof.

Clause 2: The system of Clause 1, wherein the one or more rechargeable batteries comprises lithium ion batteries, hydrogen nickel batteries, or a combination thereof.

Clause 3: The system of any one or more of Clauses 1-2, wherein the at least one building comprises a residential building, a commercial building, an industrial building, a large residential building, or a combination thereof.

Clause 4: The system of any one or more of Clauses 1-3, further comprising a second heat pump or heat exchanger configured to transfer the energy from the at least one flow of fluid to the at least one building.

Clause 5: The system of any one or more of Clauses 1-4, wherein the one or more geothermal energy storages comprises an array of geothermal boreholes.

Clause 6: The system of any one or more of Clauses 1-5, wherein the one or more conduits include a first fluid conduit containing a first flow of warm fluid and a second fluid conduit containing a second flow of cool fluid, wherein the first flow of warm fluid is at a higher temperature than the second flow of cool fluid, and wherein the first heat pump or heat exchanger is configured to transfer the energy to at least the first flow of warm fluid, the second flow of cool fluid, or both.

Clause 7: The system of Clause 6, wherein: the first fluid conduit comprises a first one or more pipes forming a first loop; the first flow of warm fluid optionally comprises warm water; the second fluid conduit comprises a second one or more pipes forming a second loop; and the second flow of cool fluid optionally comprises cool water.

Clause 8: The system of any one or more of Clauses 1-7, further comprising a third heat pump or heat exchanger configured to transfer the energy from the at least one flow of fluid, to the one or more geothermal energy storages.

Clause 9: The system of Clause 8, wherein the third heat pump or heat exchanger is further configured to transfer the energy associated with the heat stored in the one or more geothermal energy storages to the at least one flow of fluid, and wherein the at least one flow of fluid is further configured to transfer the energy associated with heat stored in the one or more geothermal energy storages to the at least one building.

Clause 10: The system of any one or more of Clauses 1-9, wherein the one or more geothermal energy storages are configured to independently generate energy.

Clause 11: A system, comprising: a battery energy storage system including one or more rechargeable batteries; an energy recovery system coupled to the battery energy storage system, wherein the energy recovery system is configured to: capture heat generated by one or more of charging and discharging the one or more rechargeable batteries; and store or use energy associated with the captured heat.

Clause 12: The system of Clause 11, wherein the one or more rechargeable batteries comprises lithium ion batteries, hydrogen nickel batteries, or a combination thereof.

Clause 13: The system of any one or more of Clauses 11-12, wherein the battery energy storage system is coupled to an energy grid.

Clause 14: The system of any one or more of Clauses 11-12, wherein the battery energy storage system is not coupled to an energy grid.

Clause 15: The system of any one or more of Clauses 11-14, wherein the energy recovery system comprises a heat pump or heat exchanger configured to capture the heat generated by the one or more of charging and discharging the one or more rechargeable batteries.

Clause 16: The system of Clause 15, wherein the heat pump or heat exchanger is configured to capture ambient air surrounding the one or more rechargeable batteries and transfer the energy associated with heat captured from a heat exchange medium to a heating and cooling system of one or more buildings, one or more geothermal energy storages, one or more fluid conduits, or a combination thereof.

Clause 17: The system of Clause 16, wherein the heat pump or heat exchanger is configured to capture ambient air surrounding the one or more rechargeable batteries and transfer the energy associated with heat capture from the ambient air to the heating and cooling system of one or more buildings, one or more geothermal energy storages, one or more fluid conduits, or a combination thereof.

Clause 18: The system of any one or more of Clauses 16-17, wherein the heating and cooling system of the one or more buildings comprises a residential heating and cooling system, a commercial heating and cooling system, an industrial heating and cooling system, a large residential heating and cooling system, a district heating and cooling system, or a combination thereof.

Clause 19: The system of any one or more of Clauses 16-18, wherein the one or more geothermal energy storages comprise an array of geothermal boreholes.

Clause 20: The system of any one or more of Clauses 16 to 19, wherein the energy recovery system further comprises at least one flow of fluid in a first fluid conduit, and wherein a heat pump or heat exchanger is configured to transfer the energy associated with the captured heat to the at least one flow of fluid.

Clause 21: The system of Clause 20, wherein the energy recovery system further comprises one or more of a first flow of warm fluid in a first fluid conduit of one or more fluid conduits and a second flow of cool fluid in a second fluid conduit of the one or more fluid conduits, wherein the first flow of warm fluid is at a higher temperature than the second flow of cool fluid, and wherein a heat pump or heat exchanger is configured to transfer the energy associated with the captured heat to the first flow of warm fluid, the second flow of cool fluid, or a combination thereof.

Clause 22: The system of Clause 21, wherein: the first fluid conduit comprises a first one or more pipes forming a first loop; the first flow of warm fluid optionally comprises warm water; the second fluid conduit comprises a second one or more pipes forming a second loop; and the second flow of cool fluid optionally comprises cool water.

Clause 23: The system of any one or more of Clauses 20-22, wherein the at least one flow of fluid is configured to transfer the energy associated with the captured heat to the one or more geothermal energy storages.

Clause 24: The system of Clause 23, wherein the at least one flow of fluid is further configured to transfer the energy associated with heat stored in the one or more geothermal energy storages to a heating and cooling system for one or more buildings.

Clause 25: The system of any one or more of Clauses 23-24, wherein the one or more geothermal energy storages are configured to independently generate energy.

Clause 26: The system of any one or more of Clauses 20-25, wherein the at least one flow of water is configured to transfer the energy associated with the captured heat to one or more buildings.

Clause 27: A method, comprising: charging or discharging one or more rechargeable batteries of a battery energy storage system; capturing heat generated by the charging or discharging of the one or more rechargeable batteries; and storing or using energy associated with the captured heat.

Clause 28: The method of Clause 27, wherein the one or more rechargeable batteries comprises lithium ion batteries, hydrogen nickel batteries, or a combination thereof.

Clause 29: The method of any one or more of Clauses 27-28, wherein the battery energy storage system is coupled to an energy grid.

Clause 30: The method of any one or more of Clauses 27-29, wherein the battery energy storage system is not coupled to an energy grid.

Clause 31: The method of any one or more of Clauses 27-30, wherein the capturing the heat generated by the charging or discharging the one or more rechargeable batteries is via a heat pump or heat exchanger.

Clause 32: The method of Clause 31, wherein the capturing the heat generated by the charging or discharging the one or more rechargeable batteries comprises transferring, via heat pump or heat exchanger, the energy associated with heat captured from a heat exchange medium to a heating and cooling system of one or more buildings, to one or more geothermal energy storages, to one or more fluid conduits, or a combination thereof.

Clause 33: The method of any one or more of Clauses 31-32, wherein the capturing the heat generated by the charging or discharging the one or more rechargeable batteries comprises: capturing ambient air surrounding the one or more rechargeable batteries; and transferring, via heat pump or heat exchanger, the energy associated with heat captured from the ambient air to a heating and cooling system of one or more buildings, to one or more geothermal energy storages, to one or more fluid conduits, or a combination thereof.

Clause 34: The method of Clause 33, wherein the heating and cooling system of the one or more buildings comprises a residential heating and cooling system, a commercial heating and cooling system, an industrial heating and cooling system, a large residential heating and cooling system, a district heating and cooling system, or a combination thereof.

Clause 35: The method of any one or more of Clauses 33-34, wherein the one or more geothermal energy storages comprises an array of geothermal boreholes.

Clause 36: The method of any one or more of Clauses 33-35, wherein the transferring the energy associated with the captured heat is via at least a flow of warm fluid of a fluid conduit of the one or more fluid conduits.

Clause 37: The method of any one or more of Clauses 33 to 36, wherein the transferring the energy associated with the captured heat is via a first flow of warm fluid in a first fluid conduit of the one or more fluid conduits and a second flow of cool fluid in a second fluid conduit of the one or more fluid conduits, wherein the first flow of warm fluid is at a higher temperature than the second flow of cool fluid.

Clause 38: The method of Clause 37, wherein: the first fluid conduit comprises a first one or more pipes forming a first loop; the first flow of warm fluid optionally comprises warm water; the second fluid conduit comprises a second one or more pipes forming a second loop; and the second flow of cool fluid optionally comprises cool water.

Clause 39: The method of Clause 38, further comprising transferring, via the at least one flow of fluid, the energy associated with heat stored in the one or more geothermal energy storages to a heating and cooling system for one or more buildings.

Clause 40: The method of any one or more of Clauses 38-39, further comprising transferring via the at least one flow of fluid, energy independently generated by the one or more geothermal energy storages to a heating and cooling system for one or more buildings.

Clause 41: An apparatus, comprising means for performing a method in accordance with any one of Clauses 1-40.

Clause 42: A non-transitory computer-readable medium comprising executable instructions that, when executed by a processor of an apparatus, cause the apparatus to perform a method in accordance with any one of Clauses 1-40.

Clause 43: A computer program product embodied on a computer-readable storage medium comprising code for performing a method in accordance with any one of Clauses 1-40.

*Additional Considerations*

The preceding description is provided to enable any person skilled in the art to practice the various aspects described herein. The examples discussed herein are not limiting of the scope, applicability, or aspects set forth in the claims. Various modifications to these aspects will be readily apparent to those skilled in the art, and the general principles defined herein may be applied to other aspects. For example, changes may be made in the function and arrangement of elements discussed without departing from the scope of the disclosure. Various examples may omit, substitute, or add various procedures or components as appropriate. For instance, the methods described may be performed in an order different from that described, and various actions may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The various illustrative logical blocks, modules and circuits described in connection with the present disclosure may be implemented or performed with a general purpose processor, a digital signal processor (DSP), an ASIC, a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, a system on a chip (SoC), or any other such configuration.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more actions for achieving the methods. The method actions may be interchanged with one another without departing from the scope of the claims. In other words, unless a specific order of actions is specified, the order and/or use of specific actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor.

The following claims are not intended to be limited to the aspects shown herein, but are to be accorded the full scope consistent with the language of the claims. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A system, comprising:

   a battery energy storage system including one or more rechargeable batteries;
   an energy recovery system coupled to the battery energy storage system,

   wherein the energy recovery system is configured to:

   capture heat generated by one or more of charging and discharging the one or more rechargeable batteries; and
   store or use energy associated with the captured heat.

2. The system of claim 1, wherein the energy recovery system comprises a heat pump or heat exchanger configured to capture the heat generated by the one or more of charging and discharging the one or more rechargeable batteries.

3. The system of claim 2, wherein the heat pump or heat exchanger is configured to capture ambient air surrounding the one or more rechargeable batteries and transfer the energy associated with heat captured from a heat exchange medium to a heating and cooling system of one or more buildings, one or more geothermal energy storages, one or more fluid conduits, or a combination thereof.

4. The system of claim 3, wherein the one or more geothermal energy storages comprises an array of geothermal boreholes.

5. The system of claim 3 or 4, wherein the energy recovery system further comprises at least one flow of fluid in a first fluid conduit, and wherein a heat pump or heat exchanger is configured to transfer the energy associated with the captured heat to the at least one flow of fluid.

6. The system of claim 5, wherein the at least one flow of fluid is configured to transfer the energy associated with the captured heat to the one or more buildings.

7. The system of claim 5 or 6, further comprising a second heat pump or heat exchanger configured to transfer the energy from the at least one flow of fluid to at least one of the one or more buildings.

8. The system of claim 5, 6 or 7, wherein the at least one flow of fluid is configured to transfer the energy associated with the captured heat to the one or more geothermal energy storages.

9. The system of any one of the claims 5-8, further comprising a third heat pump or heat exchanger configured to transfer the energy from the at least one flow of fluid, to the one or more geothermal energy storages.

**10.** The system of any one of the claims 5-9, wherein the at least one flow of fluid is further configured to transfer the energy associated with heat stored in the one or more geothermal energy storages to the heating and cooling system for the one or more buildings.

**11.** The system of any one of the claims 3 - 10, wherein the one or more geothermal energy storages are configured to independently generate energy.

**12.** The system of any one of the claims 3 - 11, wherein the energy recovery system further comprises one or more of a first flow of warm fluid in a first fluid conduit of one or more fluid conduits and a second flow of cool fluid in a second fluid conduit of the one or more fluid conduits, wherein the first flow of warm fluid is at a higher temperature than the second flow of cool fluid, and wherein a heat pump or heat exchanger is configured to transfer the energy associated with the captured heat to the first flow of warm fluid, the second flow of cool fluid, or a combination thereof.

**13.** The system of claim 12, wherein:

the first fluid conduit comprises a first one or more pipes forming a first loop; and
the second fluid conduit comprises a second one or more pipes forming a second loop.

**14.** A method, comprising:

charging or discharging one or more rechargeable batteries of a battery energy storage system;
capturing heat generated by the charging or discharging of the one or more rechargeable batteries; and
storing or using energy associated with the captured heat.

**15.** The method of claim 14, wherein capturing the heat generated by the one or more of charging and discharging the one or more rechargeable batteries is via a heat pump or a heat exchanger.

**FIG. 1**

*FIG. 2A*

*FIG. 2B*

EP 4 435 933 A1

**FIG. 3**

**FIG. 4**

FIG. 5

*FIG. 6*

A METHOD FOR RECOVERY OF WASTE ENERGY FROM A BATTERY ENERGY STORAGE SYSTEM

CHARGE OR DISCHARGE ONE OR MORE RECHARGEABLE BATTERIES OF A BATTERY ENERGY STORAGE SYSTEM — 705

CAPTURE HEAT GENERATED BY THE CHARGING OR DISCHARGING OF THE ONE OR MORE RECHARGEABLE BATTERIES — 710

STORE OR USE ENERGY ASSOCIATED WITH THE CAPTURED HEAT — 715

TRANSFER THE ENERGY ASSOCIATED WITH CAPTURED HEAT, FOR STORAGE OR USE, VIA AT LEAST ONE FLOW OF FLUID IN AT LEAST ONE FLUID CONDUIT OF ONE OR MORE FLUID CONDUITS — 720

TRANSFER, VIA THE AT LEAST ONE FLOW OF FLUID, THE ENERGY ASSOCIATED WITH HEAT STORED IN THE ONE OR MORE GEOTHERMAL STORAGES TO A HEATING AND COOLING SYSTEM FOR ONE OR MORE BUILDINGS — 725

FIG. 7 — 700

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 764 586 B1 (WOORI E N G [KR]) 13 September 2017 (2017-09-13) * paragraphs [0025] - [0031]; figures 1-5 * | 1,14 | INV. H01M10/627 H01M10/6556 H01M10/6568 H01M10/66 |
| X | WO 2023/018512 A2 (8ME NOVA LLC [US]) 16 February 2023 (2023-02-16) * paragraph [0045]; figures 1-2 * | 1,2,14, 15 | F24T10/10 F24D11/02 F24D10/00 F24D12/00 |
| X | US 2017/062885 A1 (CUTRIGHT RICHARD HAYES [US] ET AL) 2 March 2017 (2017-03-02) * paragraphs [0025] - [0031]; figures 1-5 * | 1,2,5,14 | F24D101/30 F24D103/00 |
| X | DE 10 2013 213978 A1 (SIEMENS AG [DE]) 22 January 2015 (2015-01-22) * paragraphs [0012], [0017], [0019], [0023] - [0026]; claims 1-10; figure 1 * | 1-3,5-7, 14,15 | |
| Y | | 12,13 | |
| X | EP 2 321 869 B1 (DOW KOKAM FRANCE SAS [FR]) 5 September 2012 (2012-09-05) * paragraphs [0039] - [0041]; figure 1 * | 1-3,14, 15 | TECHNICAL FIELDS SEARCHED (IPC) |
| X | CN 114 655 048 A (DONGFENG AUTOMOBILE GROUP STOCK LTD COMPANY) 24 June 2022 (2022-06-24) * the whole document * | 1-11,14, 15 | H01M F24D F24H |
| Y | US 2019/154271 A1 (ROSÉN PER [SE]) 23 May 2019 (2019-05-23) * figures 1-2 * | 12,13 | |
| A | EP 1 277 016 B1 (COLLET PETER J [NL]) 6 December 2006 (2006-12-06) * the whole document * | 12,13 | |

The present search report has been drawn up for all claims

| Place of search | Date of completion of the search | Examiner |
|---|---|---|
| Munich | 25 April 2024 | García Moncayo, O |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
                                                          
& : member of the same patent family, corresponding document

**ANNEX TO THE EUROPEAN SEARCH REPORT
ON EUROPEAN PATENT APPLICATION NO.**

EP 23 17 3658

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2024

| Patent document cited in search report | | | Publication date | Patent family member(s) | | Publication date |
|---|---|---|---|---|---|---|
| KR 101764586 | B1 | | 13-09-2017 | NONE | | |
| WO 2023018512 | A2 | | 16-02-2023 | NONE | | |
| US 2017062885 | A1 | | 02-03-2017 | NONE | | |
| DE 102013213978 | A1 | | 22-01-2015 | DE 102013213978 A1 | | 22-01-2015 |
| | | | | WO 2015007603 A1 | | 22-01-2015 |
| EP 2321869 | B1 | | 05-09-2012 | CN 102089925 A | | 08-06-2011 |
| | | | | EP 2321869 A2 | | 18-05-2011 |
| | | | | ES 2395859 T3 | | 15-02-2013 |
| | | | | FR 2933539 A1 | | 08-01-2010 |
| | | | | JP 5709014 B2 | | 30-04-2015 |
| | | | | JP 2011527500 A | | 27-10-2011 |
| | | | | KR 20110031215 A | | 24-03-2011 |
| | | | | PL 2321869 T3 | | 29-03-2013 |
| | | | | PT 2321869 E | | 20-12-2012 |
| | | | | US 2011104530 A1 | | 05-05-2011 |
| | | | | US 2015380783 A1 | | 31-12-2015 |
| | | | | WO 2010004131 A2 | | 14-01-2010 |
| CN 114655048 | A | | 24-06-2022 | NONE | | |
| US 2019154271 | A1 | | 23-05-2019 | AU 2017294400 A1 | | 06-12-2018 |
| | | | | BR 112018076591 A2 | | 16-04-2019 |
| | | | | CA 3026478 A1 | | 11-01-2018 |
| | | | | CL 2018003387 A1 | | 18-01-2019 |
| | | | | CN 109790983 A | | 21-05-2019 |
| | | | | DK 3482136 T3 | | 26-06-2023 |
| | | | | EP 3267118 A1 | | 10-01-2018 |
| | | | | EP 3482136 A1 | | 15-05-2019 |
| | | | | HR P20230783 T1 | | 27-10-2023 |
| | | | | JP 6921876 B2 | | 18-08-2021 |
| | | | | JP 2019525110 A | | 05-09-2019 |
| | | | | KR 20190017811 A | | 20-02-2019 |
| | | | | KR 20200085368 A | | 14-07-2020 |
| | | | | PL 3482136 T3 | | 25-09-2023 |
| | | | | RU 2018143498 A | | 07-08-2020 |
| | | | | US 2019154271 A1 | | 23-05-2019 |
| | | | | WO 2018007235 A1 | | 11-01-2018 |
| EP 1277016 | B1 | | 06-12-2006 | AU 4550700 A | | 30-10-2001 |
| | | | | DE 60032261 T2 | | 14-06-2007 |
| | | | | EP 1277016 A1 | | 22-01-2003 |
| | | | | WO 0179761 A1 | | 25-10-2001 |

EPO FORM P0459

For more details about this annex : see Official Journal of the European Patent Office, No. 12/82

**page 1 of 2**

## ANNEX TO THE EUROPEAN SEARCH REPORT
## ON EUROPEAN PATENT APPLICATION NO.

EP 23 17 3658

This annex lists the patent family members relating to the patent documents cited in  the above-mentioned European search report.
The members are as contained in the European Patent Office EDP file on
The European Patent Office is in no way liable for these particulars which are merely given for the purpose of information.

25-04-2024

| Patent document cited in search report | Publication date | Patent family member(s) | Publication date |
| --- | --- | --- | --- |

EPO FORM P0459

For more details about this annex : see Official Journal of the European Patent Office, No. 12/82

page 2 of 2

**REFERENCES CITED IN THE DESCRIPTION**

**Patent documents cited in the description**

- US 63491340